# EUROPEAN PATENT SPECIFICATION

(11) **EP 4 293 977 B1**
(45) Date of publication and mention of the grant of the patent: **28.10.2026**
(21) Application number: 21930789.9
(22) Date of filing: 17.03.2021
(51) Int. Cl.: H04L 43/026, H04L 43/04, H04L 43/062, H04L 43/12

(54) **NETWORK MESSAGE HANDLING DEVICE AND METHOD, AND ELECTRONIC DEVICE**
VORRICHTUNG UND VERFAHREN ZUR HANDHABUNG VON NETZWERKNACHRICHTEN UND ELEKTRONISCHE VORRICHTUNG
DISPOSITIF ET PROCÉDÉ DE TRAITEMENT DE MESSAGES RÉSEAU, ET DISPOSITIF ÉLECTRONIQUE

(43) Date of publication of application: 20.12.2023
(73) Proprietor: Huawei Technologies Co., Ltd., Shenzhen, Guangdong 518129 (CN)
(72) Inventor: BI, Zixue, Shenzhen, Guangdong 518129 (CN); HONG, Rongfeng, Shenzhen, Guangdong 518129 (CN); LI, Shunfang, Shenzhen, Guangdong 518129 (CN); PAN, Zhong, Shenzhen, Guangdong 518129 (CN)
(74) Representative: Gill Jennings & Every LLP
(86) International application number: PCT/CN2021/081393
(87) International publication number: WO 2022/193196

(56) References cited:
- CN-A- 1 983 955
- CN-A- 103 067 224
- CN-A- 105 827 474
- CN-A- 109 428 782
- US-A1- 2010 085 891
- US-A1- 2010 322 248
- US-A1- 2018 097 720
- US-A1- 2018 212 989
- US-A1- 2018 288 126
- US-A1- 2018 324 061
- US-A1- 2018 367 432
- US-B1- 7 639 613

## Description

### TECHNICAL FIELD

This application relates to the field of network technologies, and in particular, to a network packet processing device and method, an electronic device and a computer program product.

### BACKGROUND

A network is used to bear service traffic of users. Problems need to be detected and resolved in time when a fault occurs on the network, to satisfy requirements of network stability and reliability. In a conventional network processing chip, when a network fault occurs, the fault needs to be fed back to a network operation and maintenance engineer after the fault occurs and is sensed by a user. The network operation and maintenance engineer actively search for recorded log information through a network control end and analyze a problem cause. This manner is inefficient and affects a network service of the user, resulting in poor user experience.

Poor user experience caused by low processing efficiency of the conventional network processing chip is resolved through intelligent monitoring on network packet information. However, how to implement the intelligent monitoring on network packet information is a great challenge.
US 2018/288126 A1 discloses an anomaly monitor comprising anomaly detectors, an alert filter, and evidence control. The anomaly detectors detect anomalous behavior of network packet data and output alerts based on thresholds provided by a knowledge base. The alert monitor forms a list of alerts, assigns unique identifiers, and outputs the alerts to other components.

### SUMMARY

This application provides a network packet processing device and method, an electronic device and a computer program product to resolve a problem of low network fault processing efficiency in the current technology, thereby improving network packet parsing and processing efficiency, reducing impact of a network fault on a user service, and improving user satisfaction.

According to a first aspect, an embodiment of this application provides a network packet processing device according to independent claim 1.

In a possible implementation, the network monitoring instruction includes a condition-based determining instruction and a calculation instruction. The ALU module includes an information reporting module, a calculation module, a lookup table module, and one or more condition-based determining modules. The one or more condition-based determining modules are configured to: obtain the condition-based determining instruction, execute the condition-based determining instruction based on the stream information, and output an execution result of the condition-based determining instruction. The lookup table module is configured to determine packet processing information based on the execution result of the condition-based determining instruction, where the packet processing information includes a packet processing manner and/or packet alarm information. The calculation module is configured to: obtain the calculation instruction based on the packet processing manner, execute the calculation instruction based on the stream information, and output the second stream information. The information reporting module is configured to obtain the packet alarm information, and output the reported data based on the packet alarm information. In this way, using the lookup table module and in combination with the one or more condition-based determining modules, calculation module, and the information reporting module, different data processing may be performed on the monitored stream information under execution results of various different condition-based determining instructions, so that network monitoring processing is more flexible, thereby facilitating microcode programming.

Optionally, the ALU module further includes an instruction memory, and the network monitoring instruction is stored in the instruction memory. In this way, it may be convenient to temporarily store the network monitoring instruction. When the condition-based determining module and the calculation module of the ALU module need to execute the network monitoring instruction, the condition-based determining module and the calculation module only need to obtain a corresponding instruction from the instruction memory, which is convenient and quick.

Further, the instruction memory includes a condition-based determining instruction storage unit, a lookup table storage unit, and a calculation instruction storage unit. The condition-based determining instruction storage unit is configured to store the condition-based determining instruction. The lookup table storage unit is configured to store a lookup table, where the lookup table indicates a correspondence between an execution result of the condition-based determining instruction and packet processing information. The calculation instruction storage unit is configured to store the calculation instruction.

Optionally, the processing device includes a plurality of ALU modules. In this way, the plurality of ALU modules may execute the network monitoring instructions in parallel. Through parallel execution by the plurality of ALU modules and a dedicated instruction set corresponding to a network monitoring algorithm, a processing capability and processing efficiency of the network packet processor can be improved, thereby further reducing impact of a network fault on a user service and improving user satisfaction.

The network packet processing device further includes an information filtering and encapsulation module, where the information filtering and encapsulation module is configured to receive the reported data output by the ALU module and perform alarm reporting. In this way, the information filtering and encapsulation module may perform alarm reporting to prompt a network monitoring administrator of a network problem, so that a network fault can be handled in time when the network fault occurs, thereby reducing impact of the network fault on a user service and improving user satisfaction.

The information filtering and encapsulation module is further configured to send reported feedback information to the ALU module. The ALU module is further configured to receive the reported feedback information, and adjust a report condition based on the reported feedback information. The reported feedback information indicates a quantity of the packet alarm information. In this way, alarm information can be intelligently adjusted and filtered, an amount of the reported data is reduced through a negative feedback mechanism of the information filtering and encapsulation module, and most valuable information is reported, so that a network fault can be accurately fed back in time, thereby reducing impact of a network fault on a user service and improving user satisfaction.

It should be understood that, the report condition is a condition for generating the alarm alarm information, that is, may be a determining reference of each condition branch in the condition-based determining module in the network monitoring algorithm, for example, a determining threshold set in a transmission delay monitoring algorithm. If an increase or a decrease in a transmission delay time of a newly received packet compared with a transmission delay time of a reference packet exceeds the set determining threshold, it is considered that a delay jitter of the newly received packet is excessively large, and transmission delay information of the newly received packet is reported.

According to a second aspect, an embodiment of this application provides an electronic device. The electronic device includes a transceiver and a processor, where the transceiver is coupled to the processor, and the processor includes any possible network packet processing device in the first aspect.

It should be understood that the electronic device may be a network device of all nodes that carry network packets, for example, an edge network device, a core network device, a data center switch, a wireless network device, or another device. This is not specifically limited in this embodiment of this application.

According to a third aspect, an embodiment of this application provides a network packet processing method according to independent claim 7. The network packet processing method is applied to a network packet processing device.

In a possible implementation, the ALU module includes an information reporting module, a calculation module, a lookup table module, and one or more condition-based determining modules, and the network monitoring instruction includes a condition-based determining instruction and a calculation instruction. That the ALU module executes the network monitoring instruction based on the stream information, and outputs the reported data or the second stream information includes: The one or more condition-based determining modules obtains the condition-based determining instruction, executes the condition-based determining instruction based on the stream information, and outputs an execution result of the condition-based determining instruction. The lookup table module determines packet processing information based on the execution result of the condition-based determining instruction, where the packet processing information includes a packet processing manner and/or packet alarm information. The calculation module obtains the calculation instruction based on the packet processing manner, executes the calculation instruction based on the stream information, and outputs the second stream information. The information reporting module obtains the packet alarm information, and outputs the reported data based on the packet alarm information.

The network packet processing device further includes an information filtering and encapsulation module. The network packet processing method further includes: The information filtering and encapsulation module receives the reported data output by the ALU module, and performs alarm reporting.

The network packet processing method further includes: The information filtering and encapsulation module sends reported feedback information to the ALU module. The ALU module receives the reported feedback information, and adjusts a report condition based on the reported feedback information. The reported feedback information indicates a quantity of the packet alarm information, and the report condition is a condition for generating the packet alarm information.

According to a fourth aspect, a computer program product is provided which includes a processor and a memory. The memory is configured to store computer instructions. When the processor executes the computer instructions, the network packet processing device is enabled to perform the network packet processing method according to any possible implementation of the third aspect.

It may be understood that, any electronic device, network packet processing method, or the like provided above may be implemented by the corresponding network packet processing device provided above. Therefore, for beneficial effects that can be achieved by the electronic device, or the network packet processing method, refer to the beneficial effects of the network packet processing device provided above. Details are not described herein again.

### BRIEF DESCRIPTION OF DRAWINGS

FIG. 1 is a schematic diagram of a structure of a network packet processing device according to an embodiment of this application;
FIG. 2 is a schematic diagram of a structure of an ALU module of the network packet processing device shown in FIG. 1;
FIG. 3 is a flowchart of a network packet processing method according to an embodiment of this application; and
FIG. 4 is a schematic diagram of a structure of an electronic device according to an embodiment of this application.

### DESCRIPTION OF EMBODIMENTS

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. "At least one of the following items (pieces)" or similar expressions refer to any combination of these items, including any combination of singular items (pieces) or plural items (pieces). For example, at least one item (piece) of a, b, or c may represent a, b, c, a-b, a-c, b-c, or a-b-c, where a, b, and c each may be singular or plural. The character "/" generally indicates an "or" relationship between the associated objects. In addition, in embodiments of this application, the terms such as "first" and "second" constitute no limitation a quantity and an execution sequence.

It should be noted that, the term "example" or "for example" in this application is used to represent giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a related concept in a specific manner.

In this application, unless otherwise specified and limited, the term "connection" should be understood in a broad sense. For example, the "connection" may be a fixed connection, a detachable connection, an integration, a direct connection, or an indirect connection through an intermediate medium. In addition, the term "coupling" may be a manner of implementing an electrical connection for signal transmission. The "coupling" may be a direct electrical connection, or may be an indirect electrical connection through an intermediary.

A network is used to bear service traffic of users. Problems need to be detected and resolved in time when a fault occurs on the network, to satisfy requirements of network stability and reliability. In a conventional network processing chip, when a network fault occurs, the fault needs to be fed back to a network operation and maintenance engineer after the fault occurs and is sensed by a user. The network operation and maintenance engineer actively search for recorded log information through a network control end and analyze a problem cause. This manner is inefficient and affects a network service of the user, resulting in poor user experience.

When a fault occurs on the network, a network problem can be quickly and accurately positioned through the intelligent processing on network packets. In addition, the network problem is actively reported immediately after occurrence. In this way, before the user senses service loss, the network operation and maintenance engineer has found and resolved the network problem in time, thereby greatly improving user satisfaction. To implement the intelligent processing on network packets, an embodiment of this application provides a network packet processor, to monitor network traffic in real time, and identify a network exception in time. This improves network operation and maintenance efficiency, reduces impact of a network fault on a user service, and improves user satisfaction.

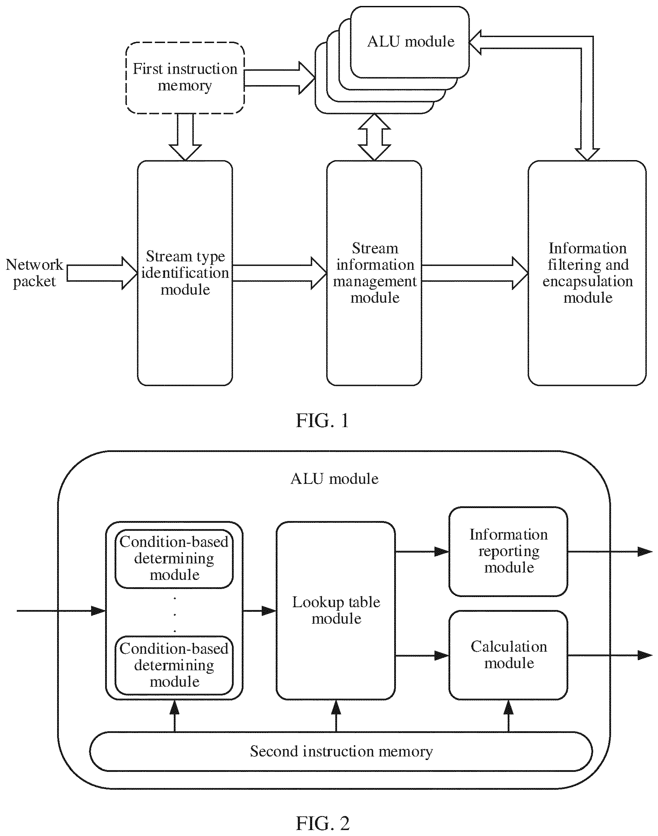

FIG. 1 is a system architectural diagram of a network packet processing device according to an embodiment of this application. Refer to FIG. 1, the network packet processing device includes a stream type identification module, a stream information management module, and an arithmetic and logic unit (arithmetic and logic unit, ALU) module.

The stream type identification module is configured to receive packet information, and determine first stream information and a stream type based on the received packet information.

Specifically, the stream type identification module may parse out a packet type based on the received packet information, for example, a transmission control protocol (transmission control protocol, TCP) packet, a user datagram protocol (user datagram protocol, UDP) packet, a remote direct memory access (remote direct memory access) protocol packet, and a quick UDP internet connection (quick UDP internet connection, QUIC) protocol packet. The stream type can be determined based on the packet type obtained by parsing. For example, a stream type of the TCP packet is a TCP stream, a stream type of the UDP packet is a UDP stream, and a stream type of the QUIC packet is a QUIC stream.

Correspondingly, the stream type identification module may further construct 5-tuple key information (a source address, a source port, a destination address, a destination port, and a transport layer protocol) of the packet based on the packet type obtained by parsing, and use the 5-tuple key information as the first stream information that indicates a stream (stream) to which the received packet information belongs. For example, a terminal whose IP address is "192.168.1.1" performs network communication, according to a "TCP protocol" through a port "10000", with a terminal whose IP address is "121.14.88.76" and whose port is "80". The 5-tuple key information may be " 192.168.1.1 10000 TCP 121.14.88.76 80".

It should be understood that, the first stream information may further include information that can be directly obtained based on the received packet information, for example, a packet serial number (serial number, SN) and a packet length in the received packet information.

In addition, the stream type identification module is further configured to obtain a network monitoring instruction based on the stream type. In a network packet monitoring process, different stream types may involve different monitored content, for example, a quantity of packets is monitored, or a packet transmission delay is monitored. For network packet monitoring, different monitoring content is corresponding to different network monitoring algorithms, and network monitoring instructions that need to be executed in different network monitoring algorithms are different. Therefore, different network monitoring instructions may be obtained based on different stream types.

Specifically, a network monitoring statistics type for network packet data may be predefined in the network packet processing device. Different network monitoring statistics types may be defined based on different packet types or stream types. A specific network monitoring algorithm may be defined for each network monitoring statistics type. That is, the network monitoring statistics type may be determined based on the stream type, and a network monitoring algorithm for the stream type may be obtained based on the network monitoring statistics type.

The network monitoring statistics types may include statistics on a quantity of packets, statistics on a quantity of bytes, histogram statistics (such as a transmission delay histogram and a packet length histogram), packet transmission delay statistics and monitoring, packet transmission delay jitter monitoring and alarm, packet loss alarm monitoring, round-trip time (round trip time, RTT) detection and statistics, detection and alarm such as a change in an egress port of a stream, a change in a type of service (type of service, TOS), and a change in a time to live (time to live, TTL), stream life cycle statistics (including a setting-up time and an end time of a stream), and the like.

The TCP protocol packet is used as an example. For example, for a stream whose 5-tuple key information is "192.168.1.1 10000 TCP 121.14.88.76 80", a stream type of the stream is a TCP stream. Network packet statistics types corresponding to the TCP stream may include packet loss alarm monitoring, packet transmission delay statistics and monitoring, and the like. Network monitoring algorithms related to the TCP stream may be a packet loss alarm monitoring algorithm and a packet transmission delay statistics and monitoring algorithm.

It should be noted that, the network monitoring algorithm may be defined in a microcode instruction, and is translated into a network monitoring instruction by a compiler and stored in a first instruction memory (instruction memory). After a network packet is identified by the stream type identification module, a stream type of a stream to which the network packet belongs may be determined, an instruction index (index) may be obtained based on the stream type, and a network monitoring instruction corresponding to the stream type may be obtained from the first instruction memory based on the instruction index. It should be understood that, the first instruction memory may be arranged in the stream type identification module, or may be arranged outside the stream type identification module, and may perform an information interaction with the stream type identification module.

The stream information management module is configured to store stream information. The stream information in the stream information management module refers to information related to a stream, that is, the stream information may include the first stream information determined by the stream type identification module, for example, the 5-tuple key information used to determine a stream to which a received packet belongs, and the information (such as an SN of the received packet) that can be directly determined from the received packet information. The stream information may further include the stream to which the received packet belongs, and temporary data and statistical information required for executing the network monitoring instruction, such as an expected packet SN of a next packet and a packet transmission delay time. It should be understood that, the temporary data and the statistical information required for executing the network monitoring instruction may be obtained through calculation by the ALU module by executing the network monitoring instruction, that is, second stream information output by the ALU module in the following description.

For example, when packet loss detection is performed on a TCP stream, an SN of a previous packet (that is, a currently received packet) needs to be recorded, and whether an SN of a next packet meets expectations is determined based on the SN of the previous packet. In this case, temporary data related to a network monitoring instruction corresponding to the TCP stream may include an expected SN of the next packet, and statistical information related to the network monitoring instruction corresponding to the TCP stream may include a quantity of lost packets and the like. The expected SN of the next packet may be determined based on the SN of the previous packet and a length of the previous packet.

It should be noted that, the stream information stored in the stream information management module may be managed using a stream table. Specifically, there may be the following two cases:

In a first case, the stream information of the stream to which the packet information received by the stream type identification module belongs does not exist in the stream information management module. In this case, a new stream table space may be created in the stream information management module to store the stream information determined by the stream type identification module.

In a second case, the stream information of the stream to which the packet information received by the stream type identification module belongs exists in the stream information management module. In this case, the first stream information (for example, the 5-tuple key information) determined by the stream type identification module may be used as an index to search for a stream table space storing the stream information, and then update the stream information to the corresponding stream table space.

In addition, if stream information in a stream table space is not updated within a specific time, the stream table space may be reclaimed, to release invalid space for use of subsequent streams.

The ALU module is configured to execute, based on the stream information stored in the stream information management module, the network monitoring instruction obtained by the stream type identification module, and output reported data or the second stream information. The reported data indicates a problem that occurs in a network. The second stream information includes the temporary data and the statistical information, and the temporary data and the statistical information are used to execute the network monitoring instruction on the stream to which the received packet information belongs.

It should be noted that, the network monitoring instruction obtained by the stream type identification module may be loaded to the ALU module for execution. Packet loss alarm monitoring on a TCP stream is used as an example. The ALU module executes a network monitoring instruction obtained by the compiler compiling the packet loss alarm monitoring algorithm. After the ALU module executes the network monitoring instruction, if determining that no packet loss occurs, the ALU module may perform calculation based on an SN of a newly received packet in the stream information and a length of the newly received packet, and output an expected SN of a next packet as the second stream information, and store or update the second stream information to the stream information management module. Correspondingly, if determining that packet loss occurs, the ALU module may output the reported data, to prompt a network administrator that a network fault may exist.

It should be understood that, the second stream information output by the ALU module is a part of information in the stream information stored in the stream information management module. After outputting the second stream information, the ALU module stores or updates the second stream information to stream information of a corresponding stream in the stream information management module. The second stream information output by the ALU module may be used as a data source for executing the network monitoring instruction next time. That is, the stream information stored in the stream information management module includes the first stream information determined by the stream type identification module and the second stream information output by the ALU module.

In conclusion, the stream type identification module of the network packet processing device may determine the stream information and the stream type based on the received packet information, and obtain the network monitoring instruction based on the stream type. The stream information management module of the network packet processing device may store the stream information. In addition, the ALU module of the network packet processing device executes, based on the stream information stored in the stream type identification module, the network monitoring instruction obtained by the stream type identification module, outputs the reported data or the second stream information, and updates the second stream information to the stream information in the stream information management module as the data source for executing the network monitoring instruction next time. This implements intelligent monitoring on network packet information, improves network packet parsing and processing efficiency, reduces impact of a network fault on a user service, and improves user satisfaction.

For example, to implement network packet monitoring, FIG. 2 is a schematic diagram of a structure of the ALU module of the network packet processing device shown in FIG. 1. Refer to FIG. 2, the ALU module includes one or more condition-based determining modules, a lookup table (lookup table, LUT) module connected to the one or more condition-based determining modules, and a calculation module and an information reporting module that are connected to the lookup table module.

It should be noted that, the network monitoring instruction obtained by the stream type identification module may include a condition-based determining instruction and a calculation instruction. The condition-based determining instruction may be executed by the one or more condition-based determining modules of the ALU module, and the calculation instruction may be executed by the calculation module of the ALU module.

More specifically, the one or more condition-based determining modules are configured to obtain the condition-based determining instruction, execute the condition-based determining instruction based on the stream information obtained from the stream information management module, and output a condition-based determining execution result. The foregoing network monitoring instruction may include a plurality of condition-based determining instructions. A plurality of condition-based determining modules are arranged in one ALU module, and each condition-based determining module may execute one condition-based determining instruction each time. When the network monitoring instruction includes the plurality of condition-based determining instructions, a plurality of condition-based determining modules may execute the plurality of condition-based determining instructions in parallel, thereby improving processing efficiency of the network packet processing device.

It should be understood that, the condition-based determining instruction may be used to compare sizes of operands for determining, for example, compare sizes of two operands, or compare a difference between two operands and a size of a third operand, and may be used for a bitwise operation of an operand. In the one or more condition-based determining modules, each condition-based determining module is configured to execute one instruction in the condition-based determining instructions, and an operation result of the instruction may be a 1-bit (bit) bool (bool) variable. That is, assuming that one ALU module includes N condition-based determining modules, the N condition-based determining modules may output a bool variable of N bits, that is, a character string of characters of 0 or 1. In other words, the execution result that is of the condition-based determining instruction and that is output by the one or more condition-based determining modules may be a character string of N bits, where N is a positive integer.

In a process in which the ALU module executes the network monitoring instruction, the execution result of the condition-based determining instruction corresponds to a next operation in a network monitoring process, for example, whether to perform alarm reporting and what content of the alarm reporting, or whether to perform a related operation and how to perform the operation.

Based on this, the lookup table module of the ALU module may be configured to determine the packet processing information based on the execution result of the condition-based determining instruction. When the network monitoring algorithm is compiled into the network monitoring instruction for execution, there is a correspondence between the execution result of the condition-based determining instruction and the packet processing information, and the correspondence between the execution result of the condition-based determining instruction and the packet processing information may be recorded using a lookup table. The ALU module only needs to find the corresponding packet processing information based on the execution result of the condition-based determining instruction.

It should be noted that, the packet processing information may include packet alarm information and/or a packet processing manner. The packet alarm information may indicate specific information about a network fault, for example, packet loss occurs during packet transmission, or a transmission delay is long. The packet processing manner may be used to indicate a manner of processing the stream information, for example, a calculation method of stream information in a monitored stream, for example, a calculation method of addition and subtraction operations, AND, OR, and NOT operations, variable resetting, maintaining an original value of a variable, a value of a variable plus one, and the like. The variable herein refers to a type of information in the stream information, for example, the packet SN in the TCP stream.

It should be understood that, using the lookup table module and in combination with the one or more condition-based determining modules, different data processing may be performed on the monitored stream information under execution results of various different condition-based determining instructions, so that network monitoring processing is more flexible, thereby facilitating microcode programming.

The packet alarm information may be transmitted to the information reporting module of the ALU module for being processed. The information reporting module may be configured to obtain the packet alarm information from the lookup table module, and output the reported data based on the packet alarm information. If the condition-based determining module generates the packet alarm information, the information reporting module may output the reported data as required, so that network management personnel can know the network fault in time and handle the fault in time. The reported data may be data or information that needs to be presented to the network management personnel, for example, a packet transmission delay time and an accumulated packet count.

The packet processing manner may be transmitted to the calculation module of the ALU module for being processed. That is, the calculation module may be configured to obtain, based on the packet processing manner obtained from the lookup table module, a calculation instruction corresponding to the packet processing manner, and the calculation module may be configured to execute the calculation instruction based on the stream information, to output the second stream information. The second stream information may be stored in the stream information of the corresponding stream in the stream information management module again. That is, the calculation module may be configured to perform an update operation on the stream information based on the packet information received by the stream type identification module.

As described above, the network monitoring instruction obtained by the stream type identification module may be obtained from the first instruction memory, then loaded to the ALU module, and executed by the ALU module. To facilitate temporary storage of the network monitoring instruction, the ALU module may further include an instruction memory as a second instruction memory, configured to store a network monitoring instruction obtained from the first instruction memory.

It should be noted that, because the network monitoring instruction may include the condition-based determining instruction and the calculation instruction, the correspondence between the execution result of the condition-based determining instruction and the packet processing information may be determined using the lookup table, and the packet processing manner in the packet processing information is associated with the calculation instruction. Therefore, the instruction memory (the second instruction memory) in the ALU module may include a condition-based determining instruction storage unit, a lookup table storage unit, and a calculation instruction storage unit.

The condition-based determining instruction storage unit is configured to store the condition-based determining instruction in the network monitoring instruction. The lookup table storage unit is configured to store the lookup table, where the lookup table indicates the correspondence between the execution result of the condition-based determining instruction and the packet processing information. The calculation instruction storage unit is configured to store the calculation instruction in the network monitoring instruction.

The following describes a field stored in the second instruction memory.

In the condition-based determining instruction storage unit:
The ALU module may include one or more condition-based determining modules, and each condition-based determining module may exclusively use an independent space in the condition-based determining instruction storage unit in the second instruction memory. In each space in the condition-based determining instruction storage unit, the following fields are recorded:
OPCODE is an operation code, where the operation code indicates an instruction type of a current comparison ALU.
OPSIZE is an operand width, used to define a width of an operand in an instruction in the foregoing operation code (OPCODE), for example, 8 bits (bit), 16 bits, or 32 bits.
SRC1 indicates an address of data of operand 1.
SRC2 indicates an address of data of operand 2.
SRC3 indicates an address of data of operand 3.
SRC_LEN is an information width that participates in an actual comparison operation. For example, a packet serial number (serial number, SN) is obtained from a packet. The packet serial number may usually appear at the front or end of the packet, that is, the packet serial number is a part of content of the packet. If the packet SN is used as an operand for the comparison operation, a specific location of the packet SN needs to be determined in the packet, for example, an information width occupied by the packet SN in the packet. The information width that participates in the actual comparison operation is defined to provide a basis for obtaining the packet SN correctly.
SRC_DIR defines a manner for obtaining the information width. For example, 0 indicates that the information is obtained from a least significant bit to a most significant bit, and 1 indicates that the information is obtained from a most significant bit to a least significant bit. The packet SN is still used as an example. Because SRC_LEN defines the information width that participates in the actual comparison operation, the packet SN can be correctly obtained from the packet only by defining, using SRC_DIR, the manner for obtaining the information width.

In the lookup table storage unit:
The storage unit records the correspondence between the execution result of the condition-based determining instruction and the packet processing information, that is, the execution result of the condition-based determining instruction is used as an index, to determine the packet processing information.

In the calculation instruction storage unit:
The calculation instruction storage unit records the following fields:
OPCODE is an operation code, where the operation code indicates an instruction type of a corresponding calculation method 1 in the calculation module.
SRC1_OPSIZE indicates a size (size) of operand 1, for example, 1 byte (byte), 2 bytes, or 4 bytes.
SRC2_OPSIZE indicates a size (size) of operand 2, for example, 1 byte (byte), 2 bytes, or 4 bytes.
SRC1 indicates an address of data of operand 1.
SRC2 indicates an address of data of operand 2.
DST_OPSIZE is used to define a size (size) of a destination operand, for example, 1 byte (byte), 2 bytes, or 4 bytes. The size of the destination operand should be less than or equal to a maximum value between the sizes of operand 1 and operand 2, that is, max{SRC1_OPSIZE, SRC2_OPSIZE}.
DST is used to define a storage address of the destination operand. A calculation result obtained after the calculation module executes the calculation instruction, that is, the second stream information, is stored based on a DST field. The DST field may define a storage address of the second stream information output by the calculation module.
OUT2_DEF is used to define an instruction type of a calculation method 2. For example, 00 indicates operand 1 plus 1, 01 indicates operand 2 plus 1, 10 indicates that an original value of operand 1 is maintained, and 11 indicates that an original value of operand 2 is maintained.

It should be noted that the calculation module may include two calculation units, for example, a first calculation unit and a second calculation unit. The first calculation unit may be configured to execute an instruction identified by the OPCODE field in the calculation instruction storage unit, and the first calculation unit outputs a calculation result obtained by the calculation module by executing the instruction identified by the OPCODE field in the calculation instruction storage unit. The second calculation unit may be configured to execute an instruction identified by the OUT2_DEF field in the calculation instruction storage unit, and the second calculation unit outputs a calculation result obtained by the calculation module by executing the instruction identified by the OUT2_DEF field in the calculation instruction storage unit. All instructions that can be executed by the first calculation unit and the second calculation unit may be used as the packet processing manner of the packet.

The following uses an example to describe a dedicated instruction set corresponding to the network monitoring algorithm. The dedicated instruction set includes all instructions obtained after the network monitoring algorithm is compiled into the network monitoring instruction. The instruction set may include the condition-based determining instruction executed in the condition-based determining module, and may further include the calculation instruction executed in the calculation module.

The condition-based determining instruction executed in the condition-based determining module may be identified using the OPCODE field in the condition-based determining instruction storage unit in the second instruction memory. Table 1 shows typical instruction examples of the condition-based determining instruction executed in the condition-based determining module.

**Table 1 Typical instruction examples of the condition-based determining module**

| Instructions | Descriptions |
|---|---|
| CMP_MORE | If SRC1 is greater than SRC2, an output result is 1; otherwise, an output result is 0. Both SRC1 and SRC2 are operands. |
| CMP_LESS | If SRC1 is less than SRC2, an output result is 1; otherwise, an output result is 0. Both SRC1 and SRC2 are operands. |
| CMPI_MORE | If SRC1 is greater than SRC2, an output result is 1; otherwise, an output result is 0. SRC1 is an operand, and SRC2 is an immediate number. |
| CMP_LESS | If SRC1 is less than SRC2, an output result is 1; otherwise, an output result is 0. SRC1 is an operand, and SRC2 is an immediate number. |
| OR | If a result obtained by performing an OR operation (SRC1 \| SRC2) on SRC1 and SRC2 is not all-zero, an output result is 1; otherwise, an output result is 0. Both SRC1 and SRC2 are operands. |
| ORI | If a result obtained by performing an OR operation (SRC1 \| SRC2) on SRC1 and SRC2 is not all-zero, an output result is 1; otherwise, an output result is 0. SRC1 is an operand, and SRC2 is an immediate number. |
| AND | If a result obtained by performing an AND operation (SRC1 & SRC2) on SRC1 and SRC2 is not all-zero, an output result is 1; otherwise, an output result is 0. Both SRC1 and SRC2 are operands. |
| ANDI | If a result obtained by performing an AND operation (SRC1& SRC2) on SRC1 and SRC2 is not all-zero, an output result is 1; otherwise, an output result is 0. SRC1 is an operand, and SRC2 is an immediate number. |
| ADDEQI | If SRC1 plus SRC2 is equal to SRC3, an output result is 1; otherwise, an output result is 0. Both SRC1 and SRC2 are operands, and SRC3 is an immediate number. |
| SUBEQI | If SRC1 minus SRC2 is equal to SRC3, an output result is 1; otherwise, an output result is 0. Both SRC1 and SRC2 are operands, and SRC3 is an immediate number. |
| SBALLONE | If a result obtained by performing an AND operation on SRC1 and SRC2 is equal to SRC2 (SRC1 & SRC2 = = SRC2), an output result is 1; otherwise, an output result is 0. SRC1 is an operand, and SRC2 is an immediate number. |
| SBALLZERO | If a result obtained by performing an OR operation on bitwise negation results of SRC1 and SRC2 and is equal to a bitwise negation result of SRC2 (SRC1 \| ~SRC2 = = ~SRC2), an output result is 1; otherwise, an output result is 0. SRC1 is an operand, and SRC2 is an immediate number; and bits of SRC2 being 1 are all 0 in SRC1. |
| SUB_MORE | If SRC1 minus SRC2 is greater than SRC3, an output result is 1; otherwise, an output result is 0. Both SRC1 and SRC2 are operands, and SRC3 is an immediate number. Note: SRC1 minus SRC2 is an unsigned subduction (unsigned subduction). Therefore, a result of SRC1 minus SRC2 is always greater than or equal to 0. |
| SUB_LESS | If SRC1 minus SRC2 is less than SRC3, an output result is 1; otherwise, an output result is 0. |
| | Both SRC1 and SRC2 are operands, and SRC3 is an immediate number. Note: The expression SRC1 minus SRC2 is unsigned subduction (unsigned subduction). Therefore, a result of SRC1 minus SRC2 is always greater than or equal to 0. |
| SSUB_MORE | If SRC1 minus SRC2 is greater than SRC3, an output result is 1; otherwise, an output result is 0. Both SRC1 and SRC2 are operands, and SRC3 is an immediate number. Note: The expression SRC1 minus SRC2 is saturated subduction (saturated subduction). When a result of SRC1 minus SRC2 is less than 0, the result is represented by 0. |
| SSUB_LESS | If SRC1 minus SRC2 is less than SRC3, an output result is 1; otherwise, an output result is 0. |
| | Both SRC1 and SRC2 are operands, and SRC3 is an immediate number. Note: The expression SRC1 minus SRC2 is saturated subduction (saturated subduction). When a result of SRC1 minus SRC2 is less than 0, the result is represented by 0. |
| ADD_MORE | If SRC1 plus SRC2 is greater than SRC3, an output result is 1; otherwise, an output result is 0. |
| | Both SRC1 and SRC2 are operands, and SRC3 is an immediate number. Note: The expression SRC1 plus SRC2 is unsigned subduction (unsigned subduction). Therefore, a result of SRC1 plus SRC2 is always greater than or equal to 0. |
| ADD_LESS | If SRC1 plus SRC2 is less than SRC3, an output result is 1; otherwise, an output result is 0. |
| | Both SRC1 and SRC2 are operands, and SRC3 is an immediate number. Note: The expression SRC1 plus SRC2 is unsigned subduction (unsigned subduction). Therefore, a result of SRC1 plus SRC2 is always greater than or equal to 0. |
| SADD_MORE | If SRC1 plus SRC2 is greater than SRC3, an output result is 1; otherwise, an output result is 0. |
| | Both SRC1 and SRC2 are operands, and SRC3 is an immediate number. Note: The expression SRC1 plus SRC2 is saturated addition. A result of SRC1 plus SRC2 is represented by a maximum value when exceeding a value range. |
| SADD_MORE | If SRC1 plus SRC2 is less than SRC3, an output result is 1; otherwise, an output result is 0. |
| | Both SRC1 and SRC2 are operands, and SRC3 is an immediate number. Note: The expression SRC1 plus SRC2 is saturated addition. A result of SRC1 plus SRC2 is represented by a maximum value when exceeding a value range. |

The following uses a packet loss scenario as an example to describe the typical instruction of the condition-based determining module in this embodiment of this application.

Transmission control protocol (transmission control protocol, TCP) packets are used as an example. Each packet carries a serial number (serial number, SN) during transmission, and the serial number SN increases gradually in a sequence of the packets. However, when an SN of a new packet exceeds a maximum value that can be represented by an SN bit width, the SN carried in the new packet is reversed and then increases gradually from 0.

During a network monitoring process, an SN of a newly received packet needs to be compared with an expected SN for determining. If the SN of the newly received packet is equal to the expected SN, it indicates that the packet is as expected and no packet loss occurs. If the SN of the newly received packet is greater than the expected SN, a packet loss scenario (that is, upstream packet loss) may be determined. If the SN of the newly received packet is less than the expected SN, another packet loss scenario (that is, downstream packet loss) may be determined.

For comparison between the SN of the newly received packet and the expected packet SN, because a packet SN has a bit width limit (for example, an SN of the TCP packet may be 32 bits), when the packet SN reaches a maximum value 2^31, the SN of the new packet is accumulated from 0. For example, assuming that the SN of the newly received packet is 2^31, and a packet length of the packet is 100, the expected packet SN is 99. Therefore, when the SN of the newly received packet is compared with the expected packet SN, absolute values of the SNs cannot be directly compared, but relative values of the SN of the newly received packet and the expected packet SN should be compared.

When the relative values of the SN of the newly received packet and the expected packet SN are compared, a half of a maximum value of the packet SN may be usually used as a determining margin. Specifically,
when (the SN of the newly received packet - the expected SN) < 2^31, the SN of the newly received packet is greater than the expected SN; or
when (the SN of the newly received packet - the expected SN) > 2^31, the SN of the newly received packet is less than the expected SN.

In this case, whether the SN of the newly received packet is greater than the expected packet SN may be determined based on the instruction SUB_MORE in the condition-based determining module. In this instruction, operand 1 is the SN of the newly received packet, operand 2 is the expected SN, and operand 3 is 2^31. When an output result of the SUB_MORE instruction is 1, the SN of the newly received packet is greater than the expected packet SN.

Similarly, whether the SN of the newly received packet is less than the expected SN may be further determined based on the instruction SUB_LESS in the condition-based determining module. In this instruction, operand 1 is the SN of the newly received packet, operand 2 is the expected SN, and operand 3 is 2^31. When an output result of the SUB_LESS instruction is 1, the SN of the newly received packet is less than the expected SN.

After the one or more condition-based determining modules output results, if a value, in output bool variables, of a condition-based determining module correspondingly executing the instruction SUB_MORE is 1, the packet alarm information, such as the upstream packet loss, may be obtained from the lookup table using the lookup table module; and if a value, in the output bool variables, of a condition-based determining module correspondingly executing the instruction SUB_LESS is 1, the packet alarm information, such as the downstream packet loss, may be obtained from the lookup table using the lookup table module.

The calculation instruction executed in the calculation module may be identified using the OPCODE field in the calculation instruction storage unit in the instruction memory. Table 2 shows typical instruction examples of the calculation instruction executed in the calculation module.

**Table 2 Typical instruction examples of the calculation module**

| Instructions | Descriptions |
|---|---|
| ADD | Both SRC1 and SRC2 are addition instructions of operands. A result is equal to an addend bit width. If the result is greater than a maximum value indicated by the bit width, only lower bits are reserved. |
| | operand [DST] = operand [SRC1] + operand [SRC2]. |
| ADDI | SRC1 is an operand, and SRC2 is an addition instruction of an immediate number. A result is equal to an addend bit width. If the result is greater than a maximum value indicated by the bit width, only lower bits are reserved. |
| | operand [DST] = operand [SRC1] + SRC2. |
| SUB | Both SRC1 and SRC2 are subtraction instructions of operands. If a minuend is less than a subtrahend, a sign bit is discarded, and the sign bit extension is not performed. |
| | operand [DST] = operand [SRC1] - operand [SRC2]. |
| SUBI | SRC1 is an operand, and SRC2 is a subtraction instruction of an immediate number. If a minuend is less than a subtrahend, a sign bit is discarded, and the sign bit extension is not performed. |
| | operand [DST] = operand [SRC1] - SRC2. |
| AND | Both SRC1 and SRC2 are AND operation instructions of operands. |
| | operand [DST] = operand [SRC1] & operand [SRC2]. |
| ANDI | SRC1 is an operand, and SRC is an AND operation instruction of an immediate number. |
| | operand [DST] = operand [SRC1] & SRC2. |
| OR | Both SRC1 and SRC2 are OR operation instructions of operands. |
| | operand [DST] = operand [SRC1] \| operand [SRC2]. |
| ORI | SRC1 is an operand, and SRC is an OR operation instruction of an immediate number. |
| | operand [DST] = operand [SRC1] \| SRC2. |
| XOR | Both SRC1 and SRC2 are exclusive OR operation instructions of operands. |
| | operand [DST] = operand [SRC1] ⊕ operand [SRC2]. |
| XORI | SRC1 is an operand, and SRC is an OR operation instruction of an immediate number. |
| | operand [DST] = operand [SRC1] ⊕ SRC2. |
| SADD | Both SRC1 and SRC2 are saturated addition instructions of operands. If a result of the addition is greater than a maximum value indicated by a bit width, the result is the maximum value indicated by the bit width. |
| | operand [DST] = operand [SRC1] + operand [SRC2]. |
| SADDI | SRC1 is an operand, SRC2 is a saturated addition instruction of an immediate number. If a result of the addition is greater than a maximum value indicated by a bit width, the result is the maximum value indicated by the bit width. |
| | operand [DST] = operand [SRC1] + SRC2. |
| SSUB | Both SRC1 and SRC2 are saturated subtraction instructions of operands. When a minuend is greater than a subtrahend, if the result is greater than a maximum value indicated by a bit width, the result is the maximum value indicated by the bit width; otherwise, the result is an actual value obtained by calculation. When the minuend is less than or equal to the subtrahend, the result is 0. |
| | operand [DST] = operand [SRC1] - operand [SRC2]. |
| SSUBI | SRC1 is an operand, and SRC2 is a saturated subtraction instruction of an immediate number. When a minuend is greater than a subtrahend, if the result is greater than a maximum value indicated by a bit width, the result is the maximum value indicated by the bit width; otherwise, the result is an actual value obtained by calculation. When the minuend is less than or equal to the subtrahend, the result is 0. |
| | operand [DST] = operand [SRC1] - SRC2. |
| LRSHIFT | SRC1 is an operand, and SRC2 is an immediate number. A zero-fill logical right shift is performed on the SRC1 operand, and a shift value is specified by the immediate number SRC2. A relationship between SRC2 and SRC1 may be represented by a relationship between a size of SRC1_OPSIZE and SRC2: |
| | SRC1_OPSIZE is 1 byte: SRC2 [2:0] is available, and the shift value ranges from 0 to 7. |
| | SRC1_OPSIZE is 2 bytes: SRC2 [3:0] is available, and the shift value ranges from 0 to 15. |
| | SRC1_OPSIZE is 3 bytes: SRC2 [4:0] is available, and the shift value ranges from 0 to 23. |
| | SRC1_OPSIZE is 4 bytes: SRC2 [4:0] is available, and the shift value ranges from 0 to 31. |
| | SRC1_OPSIZE is 5 bytes: SRC2 [4:0] is available, and the shift value ranges from 0 to 31. |
| | SRC1_OPSIZE is 6 bytes: SRC2 [4:0] is available, and the shift value ranges from 0 to 31. |
| LLSHIFT | SRC1 is an operand, and SRC2 is an immediate number. A zero-fill logical left shift is performed on the SRC1 operand, and a shift value is specified by the immediate number SRC2. A relationship between SRC2 and SRC1 may be represented by a relationship between a size of SRC1_OPSIZE and SRC2: |
| | SRC1_OPSIZE is 1 byte: SRC2 [2:0] is available, and the shift value ranges from 0 to 7. |
| | SRC1_OPSIZE is 2 bytes: SRC2 [3:0] is available, and the shift value ranges from 0 to 15. |
| | SRC1_OPSIZE is 3 bytes: SRC2 [4:0] is available, and the shift value ranges from 0 to 23. |
| | SRC1_OPSIZE is 4 bytes: SRC2 [4:0] is available, and the shift value ranges from 0 to 31. |
| | SRC1_OPSIZE is 5 bytes: SRC2 [4:0] is available, and the shift value ranges from 0 to 31. |
| | SRC1_OPSIZE is 6 bytes: SRC2 [4:0] is available, and the shift value ranges from 0 to 31. |
| LOAD | SRC2 is an immediate number. |
| | operand [DST] = SRC2. |

The expected SN is involved in the foregoing packet loss scenario. The instruction ADD, ADDI, SUB, or SUBI may be usually used to calculate the expected SN of the next packet. For example, for the TCP protocol, the expected SN of the next packet may be calculated based on the SN and the packet length of the previous packet (that is, the newly received packet).

In this network monitoring scenario, the packet processing manner may be obtained based on the output result of the condition-based determining module, for example, the expected SN of the next packet is calculated. In this case, the next expected SN may be obtained by calculation using an instruction in the calculation module, such as ADD, ADDI, SUB, or SUBI.

For example, the instruction SADD/SADDI/SSUB/SSUBI of the calculation module may be used to calculate a packet delay jitter. In the network packet processing device in this embodiment of this application, a transmission delay time of a reference packet may be recorded in stream information of a stream. If an increase or a decrease in a transmission delay time of the newly received packet compared with the transmission delay time of the reference packet exceeds a set jitter threshold of the delay jitter, it is generally considered that a delay jitter of the newly received packet is excessively large. In this case, the transmission delay time of the newly received packet may be reported in the information reporting module of the ALU module, and the transmission delay time of the newly received packet is stored in the stream information as a new transmission delay time of the reference packet.

In actual processing, a delay jitter interval may be calculated based on the transmission delay time of the reference packet and the set jitter threshold of the delay jitter using the instruction SADD/SADDI/SSUB/SSUBI, that is, a maximum value and a minimum value of the delay time are determined.

It should be noted that, in FIG. 2, one or more ALU modules are provided. When a plurality of ALU modules are provided, structures of the ALU modules may be completely the same.

Refer to FIG. 2, each ALU module may include a second instruction memory configured to store an instruction loaded to the ALU module. The instruction corresponds to a network monitoring instruction that needs to be executed for the newly received packet. That is, for execution of the network monitoring instruction, the ALU module only needs to obtain a corresponding instruction from the second instruction memory and execute the instruction. For example, determining processing of the SN of the newly received packet and the expected packet SN may be completed using the instructions SUB_MORE and SUB_LESS, so that a line-rate parsing capability for the packet. For example, at a clock rate of 1 gigahertz (GHz), a packet processing capability reaches to 1G packet per second (1G packet per second, 1GPPS).

It should be understood that, some network monitoring algorithms are complex, and a large quantity of network monitoring instructions are involved. The plurality of ALU modules may be arranged to execute the network monitoring instructions in parallel. Through parallel execution by the plurality of ALU modules and the dedicated instruction set corresponding to the network monitoring algorithm, a processing capability and processing efficiency of the network packet processor can be improved, thereby further reducing impact of a network fault on a user service and improving user satisfaction.

In addition, in the system architectural diagram of the network packet processing device shown in FIG. 1, the network packet processing device in this embodiment of this application may further include an information filtering and encapsulation module. The information filtering and encapsulation module may be connected to the ALU module and the stream information management module, and is configured to receive the reported data output by the ALU module and perform alarm reporting. In this way, the information filtering and encapsulation module may perform alarm reporting to prompt a network monitoring administrator of a network problem, so that a network fault can be handled in time when the network fault occurs, thereby reducing impact of the network fault on a user service and improving user satisfaction.

In addition, the information filtering and encapsulation module may be further configured to send reported feedback information to the ALU module. After receiving the reported feedback information, the ALU module adjusts a report condition based on the reported feedback information and re-outputs reported data. The reported feedback information indicates a quantity of the reported data, and the report condition is a condition for generating the packet alarm information. In this way, alarm information can be intelligently adjusted and filtered, an amount of reported information is reduced through a negative feedback mechanism of the information filtering and encapsulation module, and most valuable information is reported, so that a network fault can be accurately fed back in time, thereby reducing impact of a network fault on a user service and improving user satisfaction.

It should be noted that, the reported feedback information may be the amount of the reported data, or may be a rate at a current report time. For specific implementation, refer to the following example:
(1) If the reported feedback information is the amount of the reported data, a report ALU in the ALU module receives the amount of the reported data fed back by the information filtering and encapsulation module, and may determine whether the amount of the reported data exceeds a preset report quantity threshold. If the amount of the reported data exceeds the report quantity threshold, the report condition may be adjusted, to reduce the amount of the reported data.
   It should be understood that, the report quantity threshold may be a value set by the network monitoring administrator, and may be modified based on an actual situation. The report condition may be a determining reference of each condition branch in the condition-based determining module in the network monitoring algorithm, for example, a threshold of the accumulated packet count and a jitter threshold of the delay jitter. For example, if an increase or a decrease in the transmission delay time of the newly received packet compared with the transmission delay time of the reference packet exceeds a set jitter threshold of the delay jitter, it is considered that a delay jitter of the newly received packet is excessively large, and transmission delay information of the newly received packet may be reported. To reduce the amount of the reported information, the jitter threshold of the delay jitter can be adjusted to reduce the amount of the reported data.
(2) If the reported feedback information is a rate of a current report event, the report ALU in the ALU module receives the rate of the current report event, and stores the rate of the report event in the stream information management module uses as a type of information in the stream information. Then, the ALU module may be used to adjust the report condition based on the rate of the current report event. The current report event refers to an event indicated by the reported data received by the information filtering and encapsulation module at a current time.

In this case, the report condition may be adjusted using at least two ALU modules.

For example, in a first ALU module, the condition-based determining module determines and parses a generation rate of the report event, and then the calculation module obtains a corresponding instruction through the lookup table module, to adjust the report condition. The report condition may be the threshold of the accumulated packet count, the jitter threshold of the delay jitter, and the like. When the report condition is adjusted, the threshold of the accumulated packet count may be adjusted, or the jitter threshold of the delay jitter alarm is increased, to reduce a generation rate of a corresponding report event, and vice versa.

A second ALU module may re-output reported data based on an adjusted report condition, to reduce the generation rate of the corresponding report event, and further reduce the amount of the reported data, that is, reduce the amount of the reported information.

It should be understood that, the foregoing lists only two example manners of the reported feedback information. In actual implementation, another processing manner may be used. Therefore, a specific implementation is not specifically limited in this application.

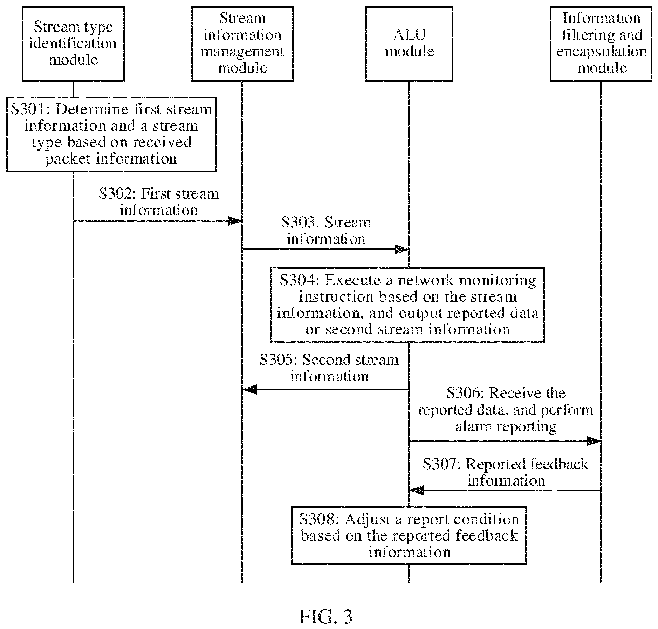

The foregoing describes the network packet processing device provided in embodiments of this application with reference to FIG. 1 and FIG. 2. The following describes a network packet processing method provided in embodiments of this application with reference to FIG. 3.

FIG. 3 is a flowchart of a network packet processing method according to an embodiment of this application. The network packet processing method is applicable to the network packet processing device shown in FIG. 1.

For example, refer to FIG. 3, the network packet processing method provided in this embodiment of this application includes the following steps.

S301: A stream type identification module determines first stream information and a stream type based on received packet information and obtains a network monitoring instruction based on the stream type.

A stream in which a terminal whose IP address is "192.168.1.1" performs network communication, according to a "TCP protocol" through a port "10000", with a terminal whose IP address is "121.14.88.76" and whose port is "80" is used as an example. 5-tuple key information "192.168.1.1 10000 TCP 121.14.88.76 80" of the stream may be used as the first stream information, and it may be determined that a stream type of the stream is a TCP stream.

The TCP stream is used as an example. Network monitoring algorithms related to the TCP stream may include a packet loss alarm, transmission delay monitoring, and the like. Therefore, in this step, the network monitoring instruction obtained by the stream type identification module based on the stream type may be an instruction corresponding to a packet loss alarm algorithm, or an instruction corresponding to a transmission delay monitoring algorithm.

It should be understood that, the method for obtaining the network monitoring instruction is described in the network packet processing device shown in FIG. 1, and details are not described herein again.

S302: A stream information management module stores the first stream information.

It should be understood that, stream information stored in the stream information management module may include the first stream information and second stream information. The first stream information may be determined by the stream type identification module, and the second stream information may be calculated and output by an ALU module.

For content of the first stream information and the second stream information, refer to related descriptions in the network packet processing device shown in FIG. 1. Details are not described herein again.

S303: The ALU module obtains the stream information from the stream information management module.

It should be understood that, for related content of the stream information, refer to related descriptions of the stream information stored in the stream information management module of the network packet processing device shown in FIG. 1. Details are not described herein again.

S304: The ALU module executes the network monitoring instruction based on the stream information, and outputs reported data or the second stream information.

In the network packet processing device shown in FIG. 1, as an execution entity of the network monitoring instruction, the ALU module may obtain the stream information from the stream information management module in real time, and execute the network monitoring instruction based on the stream information.

In this step, the ALU module may include an information reporting module, a calculation module, a lookup table module, and one or more condition-based determining modules. The network monitoring instruction includes a condition-based determining instruction and a calculation instruction. Therefore, correspondingly, step S304 may specifically include:
Step 1: The one or more condition-based determining modules obtain the condition-based determining instruction, execute the condition-based determining instruction based on the stream information, and output an execution result of the condition-based determining instruction.
Step 2: The lookup table module determines packet processing information based on the execution result of the condition-based determining instruction. The packet processing information includes a packet processing manner and/or packet alarm information.
Step 3: The calculation module obtains the calculation instruction based on the packet processing manner, executes the calculation instruction based on the stream information, and outputs the second stream information.
Step 4: The information reporting module obtains the packet alarm information, and outputs the reported data based on the packet alarm information.

It should be understood that, for an execution process of the foregoing step 1 to step 4, refer to the function descriptions of the ALU module shown in FIG. 2. Details are not described herein again.

The following describes the network packet processing method in detail by using the foregoing stream whose 5-tuple key information is "192.168.1.1 10000 TCP 121.14.88.76 80" as an example. Network monitoring algorithm related to the stream may include a packet loss alarm, transmission delay monitoring, and the like.

The packet loss alarm is used as an example. An SN of a newly received packet is recorded in the stream information, and may be obtained from the newly received packet. An expected SN of a next packet is further recorded, and the expected SN of the next packet may be obtained by calculation in a process of monitoring a packet received last time.

In this case, when the network packet processing device monitors the packet loss alarm, two condition-based determining modules in the ALU module may obtain the stream information from the stream information management module, including the SN of the newly received packet and the expected SN of the next packet, and separately obtain condition-based determining instructions SUB_MORE and SUB_LESS to compare the SN of the newly received packet with the expected SN of the next packet.

For a first condition-based determining module, the module obtains the instruction SUB_MORE from an instruction memory, and determines whether the SN of the newly received packet is greater than the expected packet SN. In the SUB_MORE instruction, operand 1 is the SN of the newly received packet, operand 2 is the expected SN, and operand 3 is 2^31. When an output result of the SUB_MORE instruction is 1, the SN of the newly received packet is greater than the expected SN.

Similarly, for a second condition-based determining module, the module obtains the instruction SUB_LESS from the instruction memory, and determines whether the SN of the newly received packet is less than the expected packet SN. In the SUB_LESS instruction, operand 1 is the SN of the newly received packet, operand 2 is the expected SN, and operand 3 is 2^31. When an output result of the SUB_LESS instruction is 1, the SN of the newly received packet is less than the expected packet SN.

If a value output by the first condition-based determining module by executing the instruction SUB_MORE is 1, the packet alarm information, such as upstream packet loss, may be obtained using the lookup table module; and if a value output by the second condition-based determining module by executing the instruction SUB_LESS is 1, the packet alarm information, such as downstream packet loss, may be obtained using the lookup table module. In this case, the information reporting module of the ALU module may output the reported data based on the obtained packet alarm information. For example, if the packet alarm information indicates the upstream packet loss, the reported data may be a quantity of lost packets, packet SNs of lost packets, and the like.

In addition, the calculation module may obtain the calculation instruction based on the packet processing manner obtained from the lookup table module. For example, the expected SN of the next packet is calculated based on the SN of the newly received packet, and the expected SN of the next packet is stored in the stream information management module as the second stream information, making it convenient to monitor and determine whether packet loss occurs in next packet transmission.

Using the transmission delay monitoring as an example, if an increase or a decrease in a transmission delay time of the newly received packet compared with a transmission delay time of a reference packet exceeds a set jitter threshold of a delay jitter, it is generally considered that a delay jitter of the newly received packet is excessively large.

Specifically, when the network packet processing device monitors the transmission delay, two condition-based determining modules in the ALU module may obtain the transmission delay time of the newly received packet and the transmission delay time of the reference packet in the stream information, and separately obtain condition-based determining instruction conditions CMP_LESS and CMP_MORE, to compare the transmission delay time of the newly received packet with the transmission delay time of the reference packet.

For a first condition-based determining module, the module obtains the instruction CMP_LESS from the instruction memory, and determines whether the transmission delay time of the newly received packet is less than a minimum time of a delay jitter interval. Therefore, in the CMP_LESS instruction, operand 1 is the transmission delay time of the newly received packet, and operand 2 is the minimum time of the delay jitter interval. When an output result of the CMP_LESS instruction is 1, the transmission delay time of the newly received packet is less than the minimum time of the delay jitter interval.

Similarly, for a second condition-based determining module, the module obtains the instruction CMP_MORE from the instruction memory, and determines whether the transmission delay time of the newly received packet is greater than a maximum time of the delay jitter interval. Therefore, in the CMP_MORE instruction, operand 1 is the transmission delay time of the newly received packet, and operand 2 is the minimum time of the delay jitter interval. When an output result of the CMP_LESS instruction is 1, the transmission delay time of the newly received packet is greater than the maximum time of the delay jitter interval.

If the condition-based determining module executes the instruction CMP_LESS or the instruction CMP_MORE and outputs a value of 1, the packet alarm information, for example, the delay jitter is excessively large, may be obtained using the lookup table module. In this case, the information reporting module of the ALU module may output the reported data based on the obtained packet alarm information. For example, if the packet alarm information indicates that the delay jitter is excessively large, the reported data may be the transmission delay time of the newly received packet.

In addition, the packet processing manner may be further obtained using the lookup table module, for example, the delay jitter interval is recalculated. In this case, the transmission delay time of the newly received packet may be used as a new transmission delay time of the reference packet. The calculation module may obtain an SADDI instruction, use the transmission delay time of the newly received packet as operand 1, and use a set threshold as operand 2, to calculate the maximum time of the delay jitter interval, and store the maximum time of the delay jitter interval. The calculation module may further obtain an SSUBI instruction, use the transmission delay time of the newly received packet as operand 1, and use a set threshold as operand 2, to calculate the minimum time of the delay jitter interval, and store the minimum time of the delay jitter interval.

It should be understood that, the transmission delay time of the newly received packet may be a time difference between a receiving time of the newly received packet at a receiving end and a sending time of the newly received packet at a sending end. Both the sending time of the newly received packet at the sending end and the receiving time of the newly received packet at the receiving end may be obtained based on newly received packet information, such as a timestamp.

S305: The ALU module stores the second stream information in the stream information management module.

It should be understood that, the second stream information output by the ALU module is a part of information in the stream information stored in the stream information management module. After outputting the second stream information, the ALU module stores or updates the second stream information to stream information of a corresponding stream in the stream information management module. The second stream information output by the ALU module may be used as a data source for executing the network monitoring instruction next time. That is, the stream information stored in the stream information management module includes the first stream information determined by the stream type identification module and the second stream information output by the ALU module.

Optionally, the network packet processing device shown in FIG. 1 may further include an information filtering and encapsulation module. For the information filtering and encapsulation module, refer to the descriptions of the information filtering and encapsulation module in FIG. 1. Details are not described herein again. Therefore, the network packet processing method shown in FIG. 3 may further include:
S306: The information filtering and encapsulation module receives the reported data from the ALU module, and performs alarm reporting.
S307: The information filtering and encapsulation module sends reported feedback information to the ALU module.

The reported feedback information indicates a quantity of the packet alarm information. For example, the reported feedback information may be a rate of a current report event.

S308: The ALU module receives the reported feedback information, and adjusts a report condition based on the reported feedback information.

It should be noted that, for specific implementations of steps S306, S307, and S308, refer to the related descriptions of the information filtering and encapsulation module and the ALU module of the network packet processing device shown in FIG. 1. Details are not described herein again.

It should be understood that, for a technical effect of the network packet processing method shown in FIG. 3, refer to the technical effect of the network packet processing device shown in FIG. 1. Details are not described herein again.

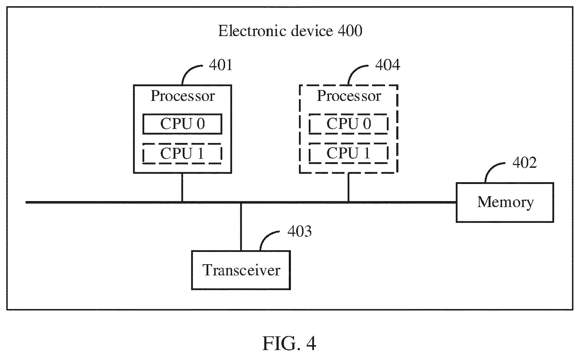

For example, FIG. 4 is a schematic diagram of a structure of an electronic device according to an embodiment of this application. As shown in FIG. 4, the electronic device 400 may include a transceiver 403 and a processor 401. The transceiver 403 is coupled to the processor 401, and the processor may include the network packet processing device shown in FIG. 1.

Optionally, the electronic device 400 may further include a memory 402, and the memory 402 is coupled to the processor 401.

It should be understood that the electronic device may be a network device of all nodes that carry network packets, for example, an edge network device, a core network device, a data center switch, a wireless network device, or another device. This is not specifically limited in this embodiment of this application.

In addition, the electronic device may alternatively be a network packet processing device. The network packet processing device includes a processor 401 and a memory 402. The memory 402 is configured to store computer instructions. When the processor 401 executes the computer instructions, the network packet processing device performs the network packet processing method shown in FIG. 3.

The following specifically describes the components of the electronic device with reference to FIG. 4.

The processor 401 is a control center of the electronic device 400, and may be one processor, or may be a collective name of a plurality of processing elements. For example, the processor 401 is one or more central processing units (central processing unit, CPU), may be an application-specific integrated circuit (application-specific integrated circuit, ASIC), or is configured as one or more integrated circuits for implementing embodiments of this application, for example, one or more microprocessors (digital signal processor, DSP) or one or more field programmable gate arrays (field programmable gate array, FPGA).

Optionally, the processor 401 may run or execute a software program stored in the memory 402, and invoke data stored in the memory 402, to perform various functions of the electronic device 400.

In a specific implementation, in an embodiment, the processor 401 may include one or more CPUs, for example, a CPU 0 and a CPU 1 shown in FIG. 4.

In a specific implementation, in an embodiment, the electronic device 400 may alternatively include a plurality of processors, for example, the processor 401 and a processor 404 shown in FIG. 4. Each of the processors may be a single-core processor (single-CPU) or may be a multi-core processor (multi-CPU). The processor herein may be one or more devices or circuits, and/or a processing core configured to process data (for example, a computer program instruction).

The memory 402 is configured to store a software program for execution the solutions of this application, and the execution is controlled by the processor 401. For a specific implementation, refer to the foregoing method embodiment. Details are not described herein again.

Optionally, the memory 402 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM), or other compact disc storage or optical disc storage (including a compressed optical disc, a laser disc, an optical disc, a digital universal optical disc, a blue-ray optical disc, and the like), a magnetic disk storage medium or another magnetic storage device, or any other medium capable of carrying or storing expected program code in a form of instructions or data structures and capable of being accessed by a computer, but is not limited thereto. The memory 402 may be integrated with the processor 401 or may exist independently, and is coupled to the processor 401 through an interface circuit (not shown in FIG. 4) of the electronic device 400. This is not specifically limited in this embodiment of this application.

The transceiver 403 is configured to communicate with another electronic device. For example, the electronic device 400 is a terminal device, and the transceiver 403 may be configured to communicate with a network device or communicate with another terminal device. For another example, the electronic device 400 is a network device, and the transceiver 403 may be configured to communicate with a terminal device or communicate with another network device.

Optionally, the transceiver 403 may include a receiver and a sender (not separately shown in FIG. 4). The receiver is configured to implement a receiving function, and the sender is configured to implement a sending function.

Optionally, the transceiver 403 may be integrated with the processor 401 or may exist independently, and is coupled to the processor 401 through the interface circuit (not shown in FIG. 4) of the electronic device 400. This is not specifically limited in this embodiment of this application.

It should be noted that the structure of the electronic device 400 shown in FIG. 4 constitutes no limitation on the electronic device. An actual electronic device may include more or fewer components than those shown in the figure, or combine some components, or have different component arrangements.

In addition, for a technical effect of the electronic device 400, refer to the technical effect of the network packet processing device shown in FIG. 1. Details are not described herein again.

In the several embodiments provided in this application, it should be understood that, the disclosed circuit and method may be implemented in other manners. For example, the described circuit embodiment is only an example. For example, division of the described modules or units is only logical function division and may be other division in actual implementation. For example, a plurality of units or components may be combined or integrated into another apparatus, or some features may be ignored or not performed.

The units described as separate parts may or may not be physically separate, and parts displayed as units may be one or more physical units, may be located in one place, or may be distributed on different places. Some or all of the units may be selected based on actual requirements to achieve the objectives of the solutions of the embodiments.

## Claims

1. A network packet processing device, comprising a stream type identification module, a stream information management module, an arithmetic and logic unit, ALU, module, and an information filtering and encapsulation module, wherein
the stream type identification module is configured to determine first stream information and a stream type based on received packet information, and obtain a network monitoring instruction based on the stream type, wherein the first stream information indicates a stream to which the received packet information belongs;
the ALU module is configured to execute the network monitoring instruction based on stream information and output reported data or second stream information, wherein the reported data indicates a problem that occurs in a network, the second stream information comprises temporary data related to the network monitoring instruction and statistical information related to the network monitoring instruction, and the temporary data and the statistical information are used to execute the network monitoring instruction on the stream to which the received packet information belongs;
the stream information management module is configured to store the stream information, wherein the stream information comprises the first stream information and the second stream information; and
the information filtering and encapsulation module is configured to receive the reported data output by the ALU module, perform alarm reporting, and send reported feedback information to the ALU module, wherein the reported feedback information indicates an amount of the reported data;
wherein the ALU module is further configured to receive the reported feedback information, and adjust a report condition based on the reported feedback information, wherein the report condition is a condition for generating packet alarm information.

2. The network packet processing device according to claim 1, wherein the network monitoring instruction comprises a condition-based determining instruction and a calculation instruction, and the ALU module comprises an information reporting module, a calculation module, a lookup table module, and one or more condition-based determining modules, wherein
the one or more condition-based determining modules are configured to: obtain the condition-based determining instruction, execute the condition-based determining instruction based on the stream information, and output an execution result of the condition-based determining instruction;
the lookup table module is configured to determine packet processing information based on the execution result of the condition-based determining instruction, wherein the packet processing information comprises a packet processing manner and/or packet alarm information;
the calculation module is configured to: obtain the calculation instruction based on the packet processing manner, execute the calculation instruction based on the stream information, and output the second stream information; and
the information reporting module is configured to obtain the packet alarm information, and output the reported data based on the packet alarm information.

3. The network packet processing device according to claim 2, wherein the ALU module further comprises an instruction memory, and the network monitoring instruction is stored in the instruction memory.

4. The network packet processing device according to claim 3, wherein the instruction memory comprises a condition-based determining instruction storage unit, a lookup table storage unit, and a calculation instruction storage unit, wherein
the condition-based determining instruction storage unit is configured to store the condition-based determining instruction;
the lookup table storage unit is configured to store a lookup table, wherein the lookup table indicates a correspondence between the execution result of the condition-based determining instruction and the packet processing information; and
the calculation instruction storage unit is configured to store the calculation instruction.

5. The network packet processing device according to any one of claims 1 to 4, wherein the processing device comprises a plurality of ALU modules.

6. An electronic device, comprising a transceiver and a processor, wherein the transceiver is coupled to the processor, and the processor is the network packet processing device according to any one of claims 1 to 5.

7. A network packet processing method, applied to a network packet processing device, wherein the processing device comprises a stream type identification module, a stream information management module, an arithmetic and logic unit, ALU, module, and an information filtering and encapsulation module; and
the method comprises:
determining (S301), by the stream type identification module, first stream information and a stream type based on received packet information, wherein the first stream information indicates a stream to which the received packet information belongs;
obtaining (S301), by the stream type identification module, a network monitoring instruction based on the stream type; and
executing (S304), by the ALU module, the network monitoring instruction based on stream information, and outputting reported data or second stream information (S305), wherein the reported data indicates a problem that occurs in a network, the second stream information comprises temporary data related to the network monitoring instruction and statistical information related to the network monitoring instruction, and the temporary data and the statistical information are used to execute the network monitoring instruction on the stream to which the received packet information belongs;
the stream information comprises the first stream information and the second stream information, and the stream information is stored in the stream information management module
receiving (S306), by the information filtering and encapsulation module, the reported data output by the ALU module, and performing alarm reporting;
sending (S307), by the information filtering and encapsulation module, reported feedback information to the ALU module, wherein the reported feedback information indicates an amount of the reported data; and
receiving, by the ALU module, the reported feedback information, and adjusting (S308) a report condition based on the reported feedback information, wherein the report condition is a condition for generating packet alarm information

8. The network packet processing method according to claim 7, wherein the ALU module comprises an information reporting module, a calculation module, a lookup table module, and one or more condition-based determining modules, and the network monitoring instruction comprises a condition-based determining instruction and a calculation instruction; and
the executing, by the ALU module, the network monitoring instruction based on stream information, and outputting reported data or second stream information comprises:
obtaining, by the one or more condition-based determining modules, the condition-based determining instruction, executing the condition-based determining instruction based on the stream information, and outputting an execution result of the condition-based determining instruction;
determining, by the lookup table module, packet processing information based on the execution result of the condition-based determining instruction, wherein the packet processing information comprises a packet processing manner and/or packet alarm information;
obtaining, by the calculation module, the calculation instruction based on the packet processing manner, executing the calculation instruction based on the stream information, and outputting the second stream information; and
obtaining, by the information reporting module, the packet alarm information, and outputting the reported data based on the packet alarm information.

9. A computer program product, comprising a processor and a memory, wherein the memory is configured to store computer instructions, and when the processor executes the computer instructions, the processor is enabled to perform the method according to any one of claims 7 to 8.

## Patentansprüche

1. Netzwerkpaketverarbeitungsvorrichtung, die ein Datenstromtyp-Identifizierungsmodul, ein Datenstrominformations-Verwaltungsmodul, eine Arithmetik- und Logikeinheits(ALU)-Modul, und ein Informationsfilterungs- und -kapselungsmodul umfasst, wobei
das Datenstromtyp-Identifizierungsmodul konfiguriert ist, um erste Datenstrominformationen und einen Datenstromtyp basierend auf empfangenen Paketinformationen zu bestimmen und eine Netzwerküberwachungsanweisung basierend auf dem Datenstromtyp zu erhalten, wobei die ersten Datenstrominformationen einen Datenstrom angeben, zu dem die empfangenen Paketinformationen gehören;
das ALU-Modul konfiguriert ist, um die Netzwerküberwachungsanweisung basierend auf Datenstrominformationen auszuführen und gemeldete Daten oder zweite Datenstrominformationen auszugeben, wobei die gemeldeten Daten ein Problem angeben, das in einem Netzwerk auftritt, die zweiten Datenstrominformationen temporäre Daten, die sich auf die Netzwerküberwachungsanweisung beziehen, und statistische Informationen, die sich auf die Netzwerküberwachungsanweisung beziehen, umfassen, und die temporären Daten und die statistischen Informationen verwendet werden, um die Netzwerküberwachungsanweisung für den Datenstrom auszuführen, zu dem die empfangenen Paketinformationen gehören;
das Datenstrominformations-Verwaltungsmodul konfiguriert ist, um die Datenstrominformationen zu speichern, wobei die Datenstrominformationen die ersten Datenstrominformationen und die zweiten Datenstrominformationen umfassen; und das Informationsfilterungs- und -kapselungsmodul konfiguriert ist, um die von dem ALU-Modul ausgegebenen gemeldeten Daten zu empfangen, eine Alarmmeldung durchzuführen und gemeldete Rückmeldeinformationen an das ALU-Modul zu senden, wobei die gemeldeten Rückmeldeinformationen eine Menge der gemeldeten Daten angeben;
wobei das ALU-Modul ferner konfiguriert ist, um die gemeldeten Rückmeldeinformationen zu empfangen und eine Meldebedingung basierend auf den gemeldeten Rückmeldeinformationen anzupassen, wobei die Meldebedingung eine Bedingung zum Erzeugen von Paketalarminformationen ist.

2. Netzwerkpaketverarbeitungsvorrichtung nach Anspruch 1, wobei die Netzwerküberwachungsanweisung eine bedingungsbasierte Bestimmungsanweisung und eine Berechnungsanweisung umfasst, und das ALU-Modul ein Informationsmeldemodul, ein Berechnungsmodul, ein Nachschlagetabellenmodul und ein oder mehrere bedingungsbasierte Bestimmungsmodule umfasst, wobei das eine oder die mehreren bedingungsbasierten Bestimmungsmodule konfiguriert sind zum: Erhalten der bedingungsbasierten Bestimmungsanweisung, Ausführen der bedingungsbasierten Bestimmungsanweisung basierend auf den Datenstrominformationen und Ausgeben eines Ausführungsergebnisses der bedingungsbasierten Bestimmungsanweisung;
das Nachschlagetabellenmodul konfiguriert ist, um Paketverarbeitungsinformationen basierend auf dem Ausführungsergebnis der bedingungsbasierten Bestimmungsanweisung zu bestimmen, wobei die Paketverarbeitungsinformationen eine Paketverarbeitungsweise und/oder Paketalarminformationen umfasst;
das Berechnungsmodul konfiguriert ist zum: Erhalten der Berechnungsanweisung basierend auf der Paketverarbeitungsweise, Ausführen der Berechnungsanweisung basierend auf den Datenstrominformationen und Ausgeben der zweiten Datenstrominformationen und
das Informationsmeldemodul konfiguriert ist, um die Paketalarminformationen zu erhalten und die gemeldeten Daten basierend auf den Paketalarminformationen auszugeben.

3. Netzwerkpaketverarbeitungsvorrichtung nach Anspruch 2, wobei das ALU-Modul ferner einen Anweisungsspeicher umfasst und die Netzwerküberwachungsanweisung in dem Anweisungsspeicher gespeichert ist.

4. Netzwerkpaketverarbeitungsvorrichtung nach Anspruch 3, wobei der Anweisungsspeicher eine Speichereinheit für die bedingungsbasierte Bestimmungsanweisung, eine Speichereinheit für die Nachschlagetabelle und eine Speichereinheit für die Berechnungsanweisung umfasst, wobei die Speichereinheit für die bedingungsbasierte Bestimmungsanweisung konfiguriert ist, um die bedingungsbasierte Bestimmungsanweisung zu speichern;
die Speichereinheit für die Nachschlagetabelle konfiguriert ist, um eine Nachschlagetabelle zu speichern, wobei die Nachschlagetabelle eine Entsprechung zwischen dem Ausführungsergebnis der bedingungsbasierten Bestimmungsanweisung und den Paketverarbeitungsinformationen angibt; und
die Speichereinheit für die Berechnungsanweisung konfiguriert ist, um die Berechnungsanweisung zu speichern.

5. Netzwerkpaketverarbeitungsvorrichtung nach einem der Ansprüche 1 bis 4, wobei die Verarbeitungsvorrichtung eine Vielzahl von ALU-Modulen umfasst.

6. Elektronische Vorrichtung, die einen Transceiver und einen Prozessor umfasst, wobei der Transceiver mit dem Prozessor gekoppelt ist und der Prozessor die Netzwerkpaketverarbeitungsvorrichtung nach einem der Ansprüche 1 bis 5 ist.

7. Netzwerkpaketverarbeitungsverfahren, das auf eine
Netzwerkpaketverarbeitungsvorrichtung angewendet wird, wobei die Verarbeitungsvorrichtung ein Datenstromtyp-Identifizierungsmodul, ein Datenstrominformations-Verwaltungsmodul, ein Arithmetik- und Logikeinheits(ALU)-Modul, und ein Informationsfilterungs- und -kapselungsmodul umfasst; und
das Verfahren umfasst:
Bestimmen (S301), durch das Datenstromtyp-Identifizierungsmodul, von ersten Datenstrominformationen und eines Datenstromtyps basierend auf empfangenen Paketinformationen, wobei die ersten Datenstrominformationen einen Datenstrom angeben, zu dem die empfangenen Paketinformationen gehören;
Erhalten (S301), durch das Datenstromtyp-Identifizierungsmodul, einer Netzwerküberwachungsanweisung basierend auf dem Datenstromtyp; und
Ausführen (S304), durch das ALU-Modul, der Netzwerküberwachungsanweisung basierend auf Datenstrominformationen und Ausgeben von gemeldeten Daten oder zweiten Datenstrominformationen (S305),
wobei die gemeldeten Daten ein Problem angeben, das in einem Netzwerk auftritt, die zweiten Datenstrominformationen temporäre Daten, die sich auf die Netzwerküberwachungsanweisung beziehen, und statistische Informationen, die sich auf die Netzwerküberwachungsanweisung beziehen, umfassen, und die temporären Daten und die statistischen Informationen verwendet werden, um die Netzwerküberwachungsanweisung für den Datenstrom auszuführen, zu dem die empfangenen Paketinformationen gehören;
die Datenstrominformationen die ersten Datenstrominformationen und die zweiten Datenstrominformationen umfassen, und die Datenstrominformationen in dem Datenstrominformations-Verwaltungsmodul gespeichert sind, Empfangen (S306), durch das Informationsfilterungs- und -kapselungsmodul, der von dem ALU-Modul ausgegebenen gemeldeten Daten, und Durchführen einer Alarmmeldung;
Senden (S307),
durch das Informationsfilterungs- und -kapselungsmodul, von gemeldeten Rückmeldeinformationen an das ALU-Modul, wobei die gemeldeten Rückmeldeinformationen eine Menge der gemeldeten Daten angeben; und
Empfangen, durch das ALU-Modul, der gemeldeten Rückmeldeinformationen und Anpassen (S308) einer Meldebedingung basierend auf den gemeldeten Rückmeldeinformationen, wobei die Meldebedingung eine Bedingung zum Erzeugen von Paketalarminformationen ist.

8. Netzwerkpaketverarbeitungsverfahren nach Anspruch 7,
wobei das ALU-Modul ein Informationsmeldemodul, ein Berechnungsmodul, ein Nachschlagetabellenmodul und ein oder mehrere bedingungsbasierte Bestimmungsmodule umfasst, und die Netzwerküberwachungsanweisung eine bedingungsbasierte Bestimmungsanweisung und eine Berechnungsanweisung umfasst; und
das Ausführen, durch das ALU-Modul, der Netzwerküberwachungsanweisung basierend auf Datenstrominformationen und das Ausgeben von gemeldeten Daten oder zweiten Datenstrominformationen umfasst:
Erhalten, durch das eine oder die mehreren bedingungsbasierten Bestimmungsmodule, der bedingungsbasierten Bestimmungsanweisung, Ausführen der bedingungsbasierten Bestimmungsanweisung basierend auf den Datenstrominformationen und Ausgeben eines Ausführungsergebnisses der bedingungsbasierten Bestimmungsanweisung;
Bestimmen, durch das Nachschlagetabellenmodul, von Paketverarbeitungsinformationen basierend auf dem Ausführungsergebnis der bedingungsbasierten Bestimmungsanweisung, wobei die Paketverarbeitungsinformationen eine Paketverarbeitungsweise und/oder Paketalarminformationen umfassen;
Erhalten, durch das Berechnungsmodul, der Berechnungsanweisung basierend auf der Paketverarbeitungsweise, Ausführen der Berechnungsanweisung basierend auf den Datenstrominformationen und Ausgeben der zweiten Datenstrominformationen; und
Erhalten, durch das Informationsmeldemodul, der Paketalarminformationen und Ausgeben der gemeldeten Daten basierend auf den Paketalarminformationen.

9. Computerprogrammprodukt, das einen Prozessor und einen Speicher umfasst, wobei der Speicher konfiguriert ist, um Computeranweisungen zu speichern, und wenn der Prozessor die Computeranweisungen ausführt, der Prozessor dazu befähigt wird, das Verfahren nach einem der Ansprüche 7 bis 8 durchzuführen.

## Revendications

1. Dispositif de traitement de paquet de réseau, comprenant un module d'identification de type de flux, un module de gestion d'informations de flux, un module d'unité arithmétique et logique, UAL, et un module de filtrage et d'encapsulation d'informations, dans lequel
le module d'identification de type de flux est configuré pour déterminer des premières informations de flux et un type de flux sur la base d'informations de paquet reçues, et obtenir une instruction de surveillance de réseau sur la base du type de flux, dans lequel les premières informations de flux indiquent un flux auquel appartiennent les informations de paquet reçues ;
le module UAL est configuré pour exécuter l'instruction de surveillance de réseau sur la base d'informations de flux et délivrer en sortie des données rapportées ou des secondes informations de flux, dans lequel les données rapportées indiquent un problème qui se produit dans un réseau, les secondes informations de flux comprennent des données temporaires liées à l'instruction de surveillance de réseau et des informations statistiques liées à l'instruction de surveillance de réseau, et les données temporaires et les informations statistiques sont utilisées pour exécuter l'instruction de surveillance de réseau sur le flux auquel appartiennent les informations de paquet reçues ;
le module de gestion d'informations de flux est configuré pour stocker les informations de flux, dans lequel les informations de flux comprennent les premières informations de flux et les secondes informations de flux ; et
le module de filtrage et d'encapsulation d'informations est configuré pour recevoir les données rapportées délivrées en sortie par le module UAL, réaliser un rapport d'alarme, et envoyer des informations de rétroaction rapportées au module UAL, dans lequel les informations de rétroaction rapportées indiquent une quantité des données rapportées ;
dans lequel le module UAL est en outre configuré pour recevoir les informations de rétroaction rapportées, et ajuster une condition de rapport sur la base des informations de rétroaction rapportées, dans lequel la condition de rapport est une condition pour la génération d'informations d'alarme de paquet.

2. Dispositif de traitement de paquet de réseau selon la revendication 1, dans lequel l'instruction de surveillance de réseau comprend une instruction de détermination basée sur une condition et une instruction de calcul, et le module UAL comprend un module de rapport d'informations, un module de calcul, un module de table de correspondance, et un ou plusieurs modules de détermination basée sur une condition, dans lequel
le ou les modules de détermination basée sur une condition sont configurés pour :
obtenir l'instruction de détermination basée sur une condition, exécuter l'instruction de détermination basée sur une condition sur la base des informations de flux, et délivrer en sortie un résultat d'exécution de l'instruction de détermination basée sur une condition ;
le module de table de correspondance est configuré pour déterminer des informations de traitement de paquet sur la base du résultat d'exécution de l'instruction de détermination basée sur une condition, dans lequel les informations de traitement de paquet comprennent un mode de traitement de paquet et/ou des informations d'alarme de paquet ;
le module de calcul est configuré pour : obtenir l'instruction de calcul sur la base du mode de traitement de paquet, exécuter l'instruction de calcul sur la base des informations de flux, et délivrer en sortie les secondes informations de flux ; et
le module de rapport d'informations est configuré pour obtenir les informations d'alarme de paquet et délivrer en sortie les données rapportées sur la base des informations d'alarme de paquet.

3. Dispositif de traitement de paquet de réseau selon la revendication 2, dans lequel le module UAL comprend en outre une mémoire d'instructions, et l'instruction de surveillance de réseau est stockée dans la mémoire d'instructions.

4. Dispositif de traitement de paquet de réseau selon la revendication 3, dans lequel la mémoire d'instructions comprend une unité de stockage d'instructions de détermination basée sur une condition, une unité de stockage de table de correspondance, et une unité de stockage d'instruction de calcul, dans lequel l'unité de stockage d'instruction de détermination basée sur une condition est configurée pour stocker l'instruction de détermination basée sur une condition ;
l'unité de stockage de table de correspondance est configurée pour stocker une table de correspondance, dans lequel la table de correspondance indique une correspondance entre le résultat d'exécution de l'instruction de détermination basée sur une condition et les informations de traitement de paquet ; et
l'unité de stockage d'instruction de calcul est configurée pour stocker l'instruction de calcul.

5. Dispositif de traitement de paquet de réseau selon l'une quelconque des revendications 1 à 4, dans lequel le dispositif de traitement comprend une pluralité de modules UAL.

6. Dispositif électronique, comprenant un émetteur-récepteur et un processeur, dans lequel l'émetteur-récepteur est couplé au processeur, et le processeur est le dispositif de traitement de paquet de réseau selon l'une quelconque des revendications 1 à 5.

7. Procédé de traitement de paquet de réseau, appliqué à un dispositif de traitement de paquet de réseau, dans lequel le dispositif de traitement comprend un module d'identification de type de flux, un module de gestion d'informations de flux, un module d'unité arithmétique et logique, UAL, et un module de filtrage et d'encapsulation d'informations ; et
le procédé comprend :
la détermination (S301), par le module d'identification de type de flux, de premières informations de flux et d'un type de flux sur la base d'informations de paquet reçues, dans lequel les premières informations de flux indiquent un flux auquel appartiennent les informations de paquet reçues ;
l'obtention (S301), par le module d'identification de type de flux, d'une instruction de surveillance de réseau sur la base du type de flux ; et
l'exécution (S304), par le module UAL, de l'instruction de surveillance de réseau sur la base d'informations de flux, et la sortie de données rapportées ou de secondes informations de flux (S305),
dans lequel les données rapportées indiquent un problème qui se produit dans un réseau, les secondes informations de flux comprennent des données temporaires liées à l'instruction de surveillance de réseau et des informations statistiques liées à l'instruction de surveillance de réseau, et les données temporaires et les informations statistiques sont utilisées pour exécuter l'instruction de surveillance de réseau sur le flux auquel appartiennent les informations de paquet reçues ;
les informations de flux comprennent les premières informations de flux et les secondes informations de flux, et les informations de flux sont stockées dans le module de gestion d'informations de flux
la réception (S306),
par le module de filtrage et d'encapsulation d'informations, des données rapportées délivrées en sortie par le module UAL, et la réalisation d'un rapport d'alarme ;
l'envoi (S307),
par le module de filtrage et d'encapsulation d'informations, d'informations de rétroaction rapportées au module UAL, dans lequel les informations de rétroaction rapportées indiquent une quantité des données rapportées ; et
la réception, par le module UAL, des informations de rétroaction rapportées, et l'ajustement (S308) d'une condition de rapport sur la base des informations de rétroaction rapportées, dans lequel la condition de rapport est une condition pour la génération d'informations d'alarme de paquet.

8. Procédé de traitement de paquet de réseau selon la revendication 7,
dans lequel le module UAL comprend un module de rapport d'informations, un module de calcul, un module de table de correspondance, et un ou plusieurs modules de détermination basée sur une condition, et l'instruction de surveillance de réseau comprend une instruction de détermination basée sur une condition et une instruction de calcul ; et
l'exécution, par le module UAL, de l'instruction de surveillance de réseau sur la base d'informations de flux, et la sortie de données rapportées ou de secondes informations de flux comprend :
l'obtention, par le ou les modules de détermination basée sur une condition, de l'instruction de détermination basée sur une condition, l'exécution de l'instruction de détermination basée sur une condition sur la base des informations de flux, et la sortie d'un résultat d'exécution de l'instruction de détermination basée sur une condition ;
la détermination, par le module de table de correspondance, d'informations de traitement de paquet sur la base du résultat d'exécution de l'instruction de détermination basée sur une condition, dans lequel les informations de traitement de paquet comprennent un mode de traitement de paquet et/ou des informations d'alarme de paquet ;
l'obtention, par le module de calcul, de l'instruction de calcul sur la base du mode de traitement de paquet, l'exécution de l'instruction de calcul sur la base des informations de flux, et la sortie des secondes informations de flux ; et
l'obtention, par le module de rapport d'informations, des informations d'alarme de paquet, et la sortie des données rapportées sur la base des informations d'alarme de paquet.

9. Produit-programme d'ordinateur, comprenant un processeur et une mémoire, dans lequel la mémoire est configurée pour stocker des instructions informatiques, et lorsque le processeur exécute les instructions informatiques, le processeur est activé pour réaliser le procédé selon l'une quelconque des revendications 7 à 8.
